# EUROPEAN PATENT SPECIFICATION

(11) **EP 3 282 680 B1**
(45) Date of publication and mention of the grant of the patent: **28.09.2022**
(21) Application number: 15890226.2
(22) Date of filing: 28.04.2015
(51) Int. Cl.: H04M 1/72403, H04M 1/725, G06F 3/01, G06F 3/0483, G06F 3/16

(54) **BLOWING ACTION-BASED METHOD FOR OPERATING MOBILE TERMINAL AND MOBILE TERMINAL**
BLASAKTIONSBASIERTES VERFAHREN ZUM BETREIBEN EINES MOBILEN ENDGERÄTS UND MOBILES ENDGERÄT
PROCÉDÉ BASÉ SUR UNE ACTION DE SOUFFLAGE POUR FAIRE FONCTIONNER UN TERMINAL MOBILE ET TERMINAL MOBILE

(43) Date of publication of application: 14.02.2018
(73) Proprietor: Huawei Technologies Co., Ltd., Shenzhen, Guangdong 518129 (CN)
(72) Inventor: CHEN, Yong, Shenzhen Guangdong 518129 (CN)
(74) Representative: Maiwald Patent- und Rechtsanwaltsgesellschaft mbH
(86) International application number: PCT/CN2015/077665
(87) International publication number: WO 2016/172846

(56) References cited:
- WO-A2-2011/019188
- CN-A- 102 946 493
- CN-A- 103 219 012
- CN-A- 103 680 501
- CN-A- 103 873 625
- CN-A- 103 955 278
- US-A1- 2012 192 121

## Description

### TECHNICAL FIELD

Embodiments of the present invention relate to the field of communications technologies, and in particular, to a method for operating a mobile terminal based on a blowing action and a mobile terminal.

### BACKGROUND

With development of mobile terminals such as smart tablet computers and smartphones, sizes of screens of the mobile terminals become increasingly large, and some limitations are caused to a screen sliding operation performed through finger touch. Especially, during a one-handed operation, it is relatively clumsy to perform a screen sliding operation by using a finger, and man-machine interaction efficiency is low.

As the sizes of the screens of the mobile terminals become increasingly large, design of dual microphones and multiple microphones becomes increasingly popular in these products, and is mainly used for noise reduction processing during a voice conversation. How to use these microphones to perform a screen sliding operation, simplify an existing operation mode, and improve man-machine interaction efficiency is a problem that needs to be resolved in the present invention.

CN 103 955 278 A describes a terminal control method which comprises the steps of capturing the airflow respectively by a first microphone and a second microphone; detecting the sequence of the airflow captured by the first microphone and the second microphone; outputting the corresponding control instruction according to the sequence.

US 2012/192121 A1 describes a breath-sensitive digital interface that enables use a person's breath or other fluid for purposes of navigating digital media, and method for using such an interface.

CN 103 680 501 A describes a method, a system and a mobile phone for recognizing gestures according to sound change rules. The therein described method includes the steps: A, arranging at least two microphones in a terminal and setting input-output relations among the sound change rules and the gestures; B, acquiring air flowing sound generated by the gestures; C, converting the acquired air flowing sound into digital signals; D, analytically calculating the digital signals, comparing the digital signals with the set input-output relations among the sound change rules and the gestures, and outputting gesture direction information.

### SUMMARY

Aspects of the present invention provide a method for operating a mobile terminal based on a blowing action and a mobile terminal as defined by the independent claims, so that a mobile terminal can be operated by using microphones on the mobile terminal, thereby simplifying an existing operation mode and improving man-machine interaction efficiency. Further embodiments are provided in the dependent claims. Further embodiments provided in the description not falling under the scope of protection of the claims are provided for explanatory purpose only.

The invention is directed to the subject-matter of the independent claims. Advantageous embodiments are set out in the dependent claims. According to the invention a mobile terminal can be operated by using microphones on the mobile terminal, thereby simplifying an existing operation mode and improving man-machine interaction efficiency.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a method for operating a mobile terminal based on a blowing action according to the present invention;
FIG. 2 is a schematic flowchart of another method for operating a mobile terminal based on a blowing action according to the present invention;
FIG. 3A and FIG. 3B are diagrams of sound signals that correspond to different blowing directions according to an embodiment of the present invention;
FIG. 4 is a schematic diagram of an operation effect according to an embodiment of the present invention;
FIG. 5 is a schematic diagram of another operation effect according to an embodiment of the present invention;
FIG. 6 is a schematic diagram of another operation effect according to an embodiment of the present invention;
FIG. 7 is a schematic diagram of another operation effect according to an embodiment of the present invention;
FIG. 8 is a schematic structural diagram of a mobile terminal according to an embodiment of the present invention;
FIG. 9 is a schematic structural diagram of another mobile terminal according to an embodiment of the present invention; and
FIG. 10 is a schematic structural diagram of still another mobile terminal according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

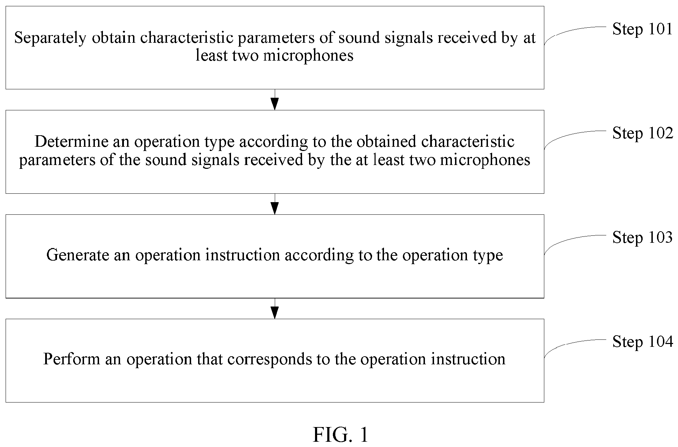

An embodiment of the present invention provides a method for operating a mobile terminal based on a blowing action. As shown in FIG. 1, the method includes the following steps:
Step 101: Separately obtain characteristic parameters of sound signals received by the at least two microphones.
Step 102: Determine an operation type according to the obtained characteristic parameters of the sound signals received by the at least two microphones.

The characteristic parameters of the sound signals received by the at least two microphones are parameters that can represent physical characteristics of the sound signals received by the at least two microphones. The characteristic parameters can be used to distinguish and identify different sound signals. The characteristic parameters are start moments, input duration, and sound loudness of the sound signals received by the at least two microphones.

Step 103: Generate an operation instruction according to the operation type.

Step 104: Perform an operation that corresponds to the operation instruction.

This embodiment of the present invention provides a method for operating a mobile terminal based on a blowing action. The mobile terminal is provided with at least two microphones. When a user bows air to the at least two microphones, characteristic parameters of sound signals received by the at least two microphones are separately obtained. An operation type is determined according to the obtained characteristic parameters of the sound signals received by the at least two microphones. An operation instruction is generated according to the operation type. An operation that corresponds to the operation instruction is performed. Therefore, a mobile terminal can be operated by using microphones on the mobile terminal, thereby simplifying an existing operation mode and improving man-machine interaction efficiency.

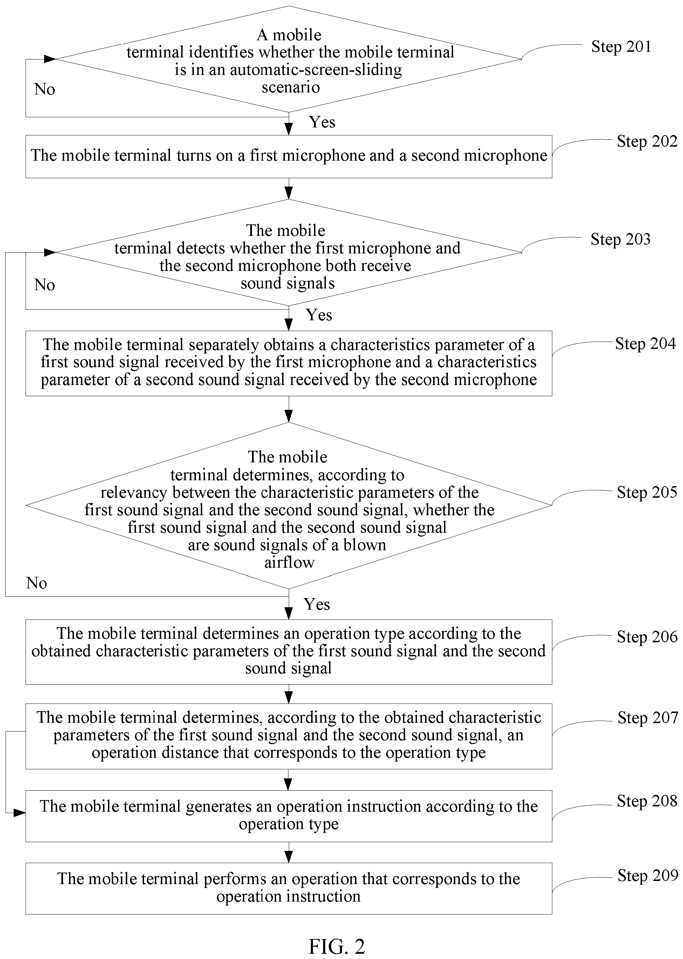

To make persons skilled in the art understand the technical solutions provided in the embodiments of the present invention more clearly, the method for operating a mobile terminal based on a blowing action provided in this embodiment of the present invention is described below in detail by using a specific embodiment. For ease of description, that a first microphone is a microphone disposed on the top of a mobile terminal and the second microphone is a microphone disposed at the bottom of the mobile terminal is used as an example. As shown in FIG. 2, the method includes the following steps.

Step 201: The mobile terminal identifies whether the mobile terminal is in an automatic-screen-sliding scenario.

In this embodiment of the present invention, "screen sliding" may be construed as a movement of content displayed on a screen of the mobile terminal. The movement includes, but is not limited to: touch unblock, sliding unblock, an up/down movement or a left/right movement of the displayed content, page up, and page down. The automatic-screen-sliding scenario may be construed as a scenario in which the foregoing "screen sliding" operation can be performed without needing a touch operation by a user.

For example, in an implementation manner, an on-off key may be set on a drop-down (or may be another direction) notification bar of the terminal, to make it convenient for the user to turn off or on the on-off key. When the user enables an automatic-screen-sliding function by using the on-off key, the mobile terminal determines that the mobile terminal is currently in the automatic-screen-sliding scenario. Otherwise, the mobile terminal determines that the mobile terminal is not in the automatic-screen-sliding scenario.

Alternatively, in another implementation manner, an automatic-screen-sliding function may be set in advance to be associated with some application programs. These application programs may be application programs, such as a browser, a reading application, and a video application, that the user wants to operate without any hand blocking the screen. In this way, when the user runs the foregoing application programs on the mobile terminal, the mobile terminal determines that the mobile terminal is currently in the automatic-screen-sliding scenario, and after these application programs are exited, the mobile terminal determines that the mobile terminal is not currently in the automatic-screen-sliding scenario.

Alternatively, in another implementation manner, a preset enabling gesture and a preset disabling gesture may be associated with an automatic-screen-sliding function. When a user gesture received by the mobile terminal is consistent with the enabling gesture, it is determined that the mobile terminal is currently in the automatic-screen-sliding scenario, and when a user gesture received by the mobile terminal in the automatic-screen-sliding scenario is consistent with the disabling gesture, the mobile terminal determines that the mobile terminal is not currently in the automatic-screen-sliding scenario.

The foregoing several manners are only examples, and the present invention includes, but is not limited to the foregoing several manners. In addition, another possible manner may be used to identify whether the mobile terminal is in the automatic-screen-sliding scenario, and examples are not separately provided herein.

If it is identified that the mobile terminal is in the automatic-screen-sliding scenario, step 202 is performed; otherwise, step 201 continues to be performed.

Step 202: The mobile terminal turns on the first microphone and the second microphone.

Step 203: The mobile terminal detects whether the first microphone and the second microphone both receive sound signals, and if the first microphone and the second microphone both receive sound signals, step 204 is performed; otherwise, step 203 continues to be performed.

Step 204: The mobile terminal separately obtains a characteristics parameter of a first sound signal received by the first microphone and a characteristics parameter of a second sound signal received by the second microphone.

The characteristic parameters of the first sound signal and the second sound signal include at least one of start moments, input duration, and sound loudness of the first sound signal and the second sound signal. When the user blows air to the first microphone and the second microphone, an airflow signal should have a particular strength (for example, loudness of a sound signal reaches a particular dB value) and stability (for example, the sound signal needs to exist for a period of time). In addition, the first sound signal and the second sound signal should be relevant, but a difference lies in that the first sound signal and the second sound signal have different start moments and different sound loudness when air is blown in different directions. Therefore, the following steps are used to determine whether the first sound signal and the second sound signal are sound signals that are generated by the user by blowing air.

Step 205: The mobile terminal determines, according to relevancy between the characteristic parameters of the first sound signal and the second sound signal, whether the first sound signal and the second sound signal are sound signals of a blown airflow.

For example, the characteristics parameter of the sound signal includes the start moment, the input duration, and the sound loudness of the sound signal. Before it is determined, by using the relevancy between the characteristic parameters of the first sound signal and the second sound signal, whether the first sound signal and the second sound signal are sound signals of a blown airflow, screening may be first performed by using the input duration of the first sound signal and the input duration of the second sound signal, so as to reduce processing complexity. A specific method is as follows:
After the first microphone and the second microphone respectively receive the first sound signal and the second sound signal, the input duration of the first sound signal and the input duration of the second sound signal may be first compared with preset duration.

If the input duration of the first sound signal and the input duration of the second sound signal are less than the preset duration, it is determined that the first sound signal and the second sound signal are not sound signals of a blown airflow.

If the input duration of the first sound signal and the input duration of the second sound signal are greater than or equal to the preset duration, the first sound signal and the second sound signal may be sound signals of a blown airflow, and to make sure,
relevancy between the first sound signal and the second sound signal is obtained.

The relevancy (Relevancy) refers to a degree of correlation between two objects, and generally may be represented in percent. Therefore, the relevancy between the first sound signal and the second sound signal may be construed as a degree of correlation between the first sound signal and the second sound signal.

For example, the characteristic parameters of the first sound signal and the second sound signal may further include frequencies of the first sound signal and the second sound signal. Therefore, the frequency of the first sound signal and the frequency of the second sound signal may be obtained, and the relevancy between the first sound signal and the second sound signal is calculated according to the frequency of the first sound signal and the frequency of the second sound signal. When the user blows air to the first microphone and the second microphone, there is only one sound source. Therefore, if the first sound signal and the second sound signal are sounds of a blown airflow, a frequency of the first sound signal and a frequency of the second sound signal should be the same or have a very small error. Therefore, the obtained relevancy should be equal to 1 or be approximately 1.

Alternatively, the relevancy between the first sound signal and the second sound signal may be calculated according to a variation trend of the sound loudness of the first sound signal within a period of time and a variation trend of the sound loudness of the second sound signal within the same time. A variation trend of the sound loudness of the first sound signal within a sampling time period and a variation trend of the sound loudness of the second sound signal within the same sampling time may be calculated by obtaining sound loudness values of the first sound signal and the second sound signal at multiple sampling points within the sampling time. When the variation trends are closer, the relevancy is also closer to 1. Alternatively, the relevancy between the first sound signal and the second sound signal may be obtained by comparing a waveform of the sound loudness of the first sound signal within a period of time with a waveform of the sound loudness of the second sound signal. When the waveforms are closer, the relevancy is also closer to 1. The sampling time and the period of time may be input duration of the first sound signal and the second sound signal, or may be a period of time less than the input duration.

Certainly, for more accurate identification, the foregoing two methods may be combined together. In addition, the foregoing methods in which the frequencies and the sound loudness are used to calculate the relevancy are only examples, and another parameter that can be used to evaluate the relevancy between the two sound signals may also be used.

After the relevancy between the first sound signal and the second sound signal is obtained, the obtained relevancy may be compared with a preset relevancy threshold.

When the obtained relevancy is greater than or equal to the relevancy threshold, it is determined that the first sound signal and the second sound signal are sound signals generated by a blown airflow; otherwise, it is determined that the first sound signal and the second sound signal are not sound signals generated by a blown airflow. In this way, a sound signal generated due to another reason may be excluded, thereby avoiding a misoperation.

After it is determined that the first sound signal and the second sound signal are sound signals generated by a blown airflow, step 206 is performed, or step 203 is returned.

Step 206: The mobile terminal determines an operation type according to the obtained characteristic parameters of the first sound signal and the second sound signal, where the characteristic parameters of the first sound signal and the second sound signal include start moments, input duration, and sound loudness of the first sound signal and the second sound signal.

Specifically, when air is blown in different directions, the first sound signal and the second sound signal have different start moments and different sound loudness. For example, when air is blown from bottom to top of the mobile terminal, a sound signal is first received by the second microphone, and because a mouth of the user is closer to the second microphone, the loudness of the second sound signal received by the second microphone is greater than the loudness of the first sound signal received by the first microphone. Conversely, when air is blown from top to bottom of the mobile terminal, a sound signal is first received by the first microphone, and because the mouth of the user is closer to the first microphone, the loudness of the first sound signal received by the first microphone is greater than the loudness of the second sound signal received by the second microphone.

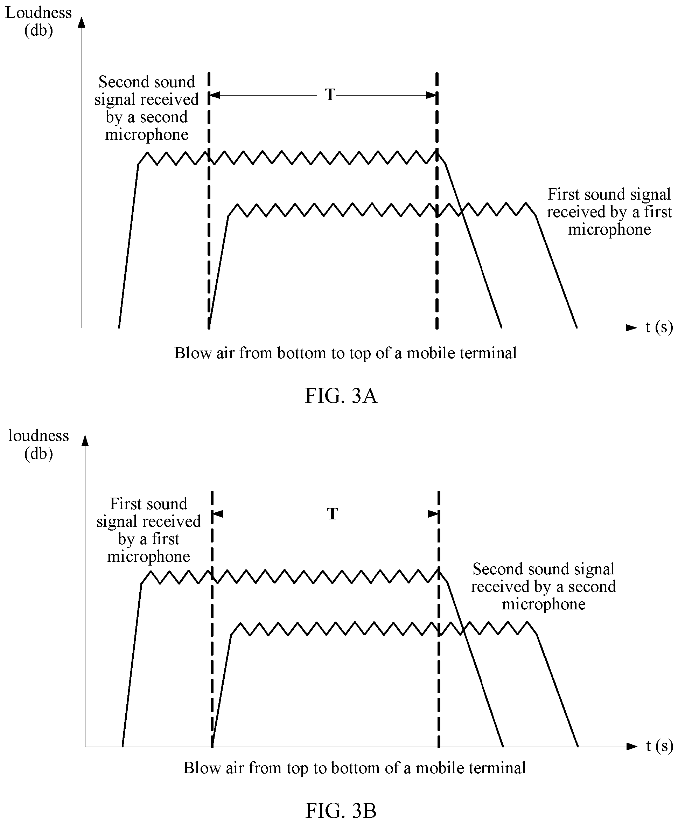

Therefore, a blowing direction may be determined according to the obtained start moments and the obtained sound loudness of the first sound signal and the second sound signal. FIG. 3A and FIG. 3B are diagrams of sound signals that correspond to different blowing directions according to an embodiment of the present invention.

First, if the start moment of the first sound signal is earlier than the start moment of the second sound signal, and the sound loudness of the first sound signal is greater than the sound loudness of the second sound signal, it is determined that the user blows air from top to bottom of the mobile terminal, so that it may be determined that the operation type is a first operation.

If the start moment of the second sound signal is earlier than the start moment of the first sound signal, and the sound loudness of the second sound signal is greater than the sound loudness of the first sound signal, it is determined that the user blows air from bottom to top of the mobile terminal, so that it may be determined that the operation type is a second operation.

It should be noted that because the sound loudness of the first sound signal and the second sound signal may fluctuate within entire input duration of the first sound signal and the second sound signal, the following method may be used to compare the sound loudness of the first sound signal and the second sound signal.

If sound loudness of the first sound signal at a moment t1 is greater than sound loudness of the second sound signal at a moment t2, it is determined that the sound loudness of the first sound signal is greater than the sound loudness of the second sound signal. The moment t1 is any moment within the input duration of the first sound signal, a difference between the moment t2 and the moment t1 is Δt, and Δt is a difference between the start moment of the second sound signal and the start moment of the first sound signal.

Likewise, if sound loudness of the second sound signal at a moment t2 is greater than sound loudness of the first sound signal at a moment t1, the sound loudness of the second sound signal is greater than the sound loudness of the first sound signal. The moment t2 is any moment of the second sound signal within the input duration of the second sound signal, a difference between the moment t1 and the moment t2 is Δt, and Δt is a difference between the start moment of the first sound signal and the start moment of the second sound signal.

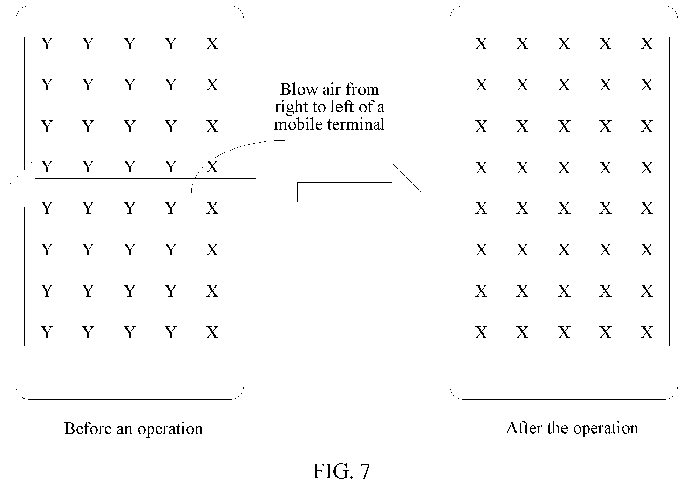

Alternatively, a period of time, such as a period of time T in FIG. 7 when the first sound signal and the second sound signal are both stable, may be selected from the entire input duration of the first sound signal and the second sound signal. If the sound loudness of the first sound signal is greater than the sound loudness of the second sound signal at any moment within T, it is determined that the sound loudness of the first sound signal is greater than the sound loudness of the second sound signal. If the sound loudness of the second sound signal is greater than the sound loudness of the first sound signal at any moment within T, it is determined that the sound loudness of the second sound signal is greater than the sound loudness of the first sound signal.

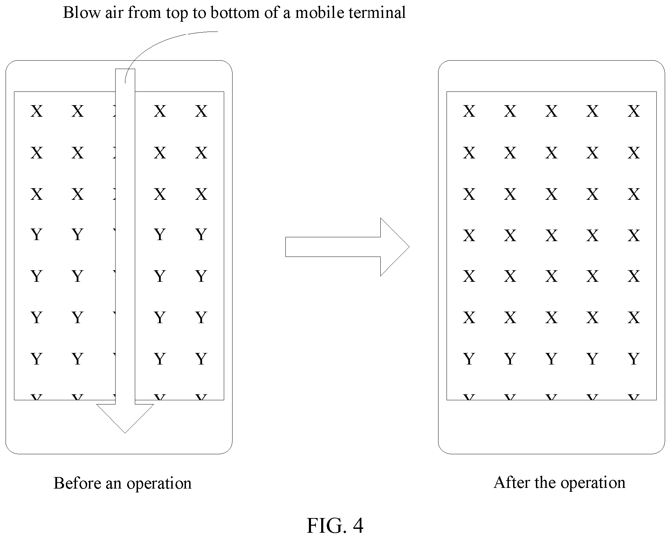

For example, specific content of the first operation and the second operation may be pre-configured according to a need. The first operation corresponds to blowing of air from top to bottom of the mobile terminal, and the second operation corresponds to blowing of air from bottom to top of the mobile terminal. For example, the first operation may be a movement of the displayed content of the mobile terminal from top to bottom, or a page up operation, or an operation of sliding from top to bottom to unblock (which may be construed as an operation of moving a slider from top to bottom in a lock screen interface to unlock). For example, as shown in FIG. 4, the first operation is a movement of displayed content from top to bottom, or the first operation may be a back operation (not shown in the figure) during running of a browser or a similar application program.

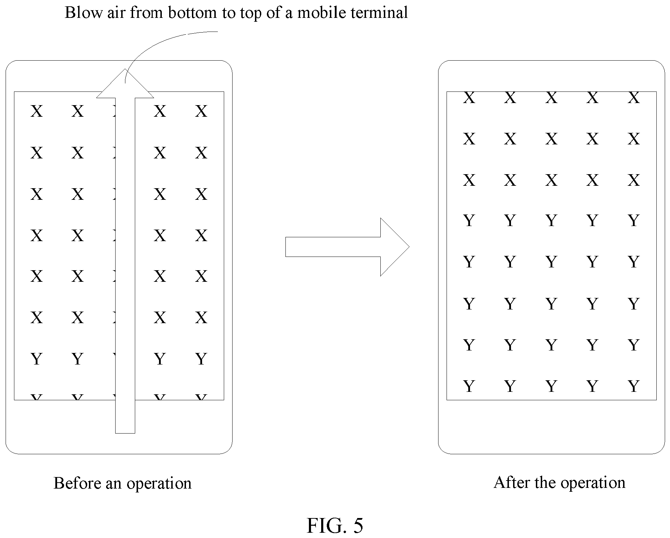

The second operation may be a movement of the displayed content of the mobile terminal from bottom to top, or a page down operation, or an operation of sliding from bottom to top to unblock (which may be construed as an operation of moving a slider from bottom to top in a lock screen interface to unlock). For example, as shown in FIG. 5, the second operation is a movement of displayed content from bottom to top, or the second operation may be a forward operation (not shown in the figure) during running of a browser or a similar application program.

Further, the method may further include:
Step 207: The mobile terminal determines, according to the obtained characteristic parameters of the first sound signal and the second sound signal, an operation distance (or may be referred to as an operation path) that corresponds to the operation type.

For example, when the first operation is a movement of the displayed content of the mobile terminal from top to bottom or an operation of sliding from top to bottom to unblock, and the second operation is a movement of the displayed content of the mobile terminal from bottom to top or an operation of sliding from bottom to top to unblock, an operation distance further needs to be obtained.

In an example in which the first operation is a movement of the displayed content of the mobile terminal from top to bottom, an operation distance that corresponds to the first operation is a distance by which the displayed content of the mobile terminal moves from bottom to top. Likewise, when the second operation is a movement of the displayed content of the mobile terminal from bottom to top, an operation distance that corresponds to the second operation is a distance by which the displayed content of the mobile terminal moves from bottom to top.

Because a distance by which the displayed content moves may be measured by using a pixel value, the operation distance that corresponds to the first operation may be a pixel value by which the displayed content of the mobile terminal needs to move from bottom to top, and the operation distance that corresponds to the second operation may be a pixel value by which the displayed content of the mobile terminal needs to move from bottom to top.

Likewise, when the first operation is an operation of sliding from top to bottom to unblock, an operation distance that corresponds to the first operation is a pixel value by which a slider in an unblock interface needs to move from top to bottom. When the second operation is an operation of sliding from bottom to top to unblock, an operation distance that corresponds to the second operation is a pixel value by which the slider in the unblock interface needs to move from bottom to top.

In addition, the operation distance that corresponds to the first operation or the second operation may be determined according to at least one of the input duration of the first sound signal or the input duration of the second sound signal. Using a pixel value as an example, magnitude of the pixel value that needs to be moved may be directly determined according to the input duration of the first sound signal and the input duration of the second sound signal. For example, to-be-moved pixel values that correspond to different input duration may be preset, or a unit pixel value that corresponds to per unit of duration may be preset. After the input duration of the first sound signal and the input duration of the second sound signal are obtained, a corresponding to-be-moved pixel value may be obtained according to the input duration. If a sound signal is generated by the user by blowing air, the input duration of the first sound signal and the input duration of the second sound signal should be equal or have a very small error. Therefore, during calculation, the input duration of at least one of the first sound signal or the second sound signal needs to be used.

Step 208: The mobile terminal generates an operation instruction according to the operation type.

Certainly, if there is an operation distance that corresponds to the determined operation type, the operation instruction needs to be generated according to the operation type and the operation distance.

Step 209: The mobile terminal performs an operation that corresponds to the operation instruction.

Optionally, in another implementation manner, in this embodiment, the first microphone may be a microphone disposed on the left of the mobile terminal, and the second microphone may be a microphone disposed on the right of the mobile terminal.

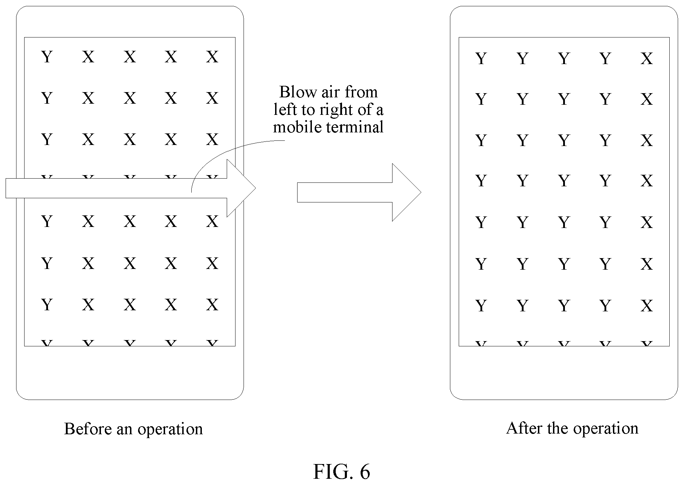

In this case, correspondingly, the first operation corresponds to blowing of air from left to right of the mobile terminal, and the second operation corresponds to blowing of air from right to left of the mobile terminal. For example, the first operation may be a movement of the displayed content of the mobile terminal from left to right, or a page up operation, or an operation of sliding from left to right to unblock (which may be construed as an operation of moving a slider from left to right in a lock screen interface to unlock). For example, as shown in FIG. 6, the first operation is a movement of displayed content from left to right, or the first operation may be a back operation (not shown in the figure) during running of a browser or a similar application program.

The second operation may be a movement of the displayed content of the mobile terminal from right to left, or a page down operation, or an operation of sliding from right to left to unblock (which may be construed as an operation of moving a slider from right to left in a lock screen interface to unlock). For example, as shown in FIG. 7, the second operation is a movement of displayed content of a mobile terminal from right to left, or the second operation may be a forward operation (not shown in the figure) during running of a browser or a similar application program.

In addition, when the first microphone and the second microphone are disposed on the left and right of the mobile terminal, a method for operating a mobile terminal based on a blowing action is the same as the method described above in which the first microphone and the second microphone are disposed on the top and at the bottom of the mobile terminal.

In addition, it should be noted that, step 204 in which the mobile terminal separately obtains the characteristics parameter of the first sound signal received by the first microphone and the characteristics parameter of the second sound signal received by the second microphone may be periodically performed. That is, at an interval of a preset period of time, the characteristics parameter of the first sound signal and the characteristics parameter of the second sound signal are obtained, and remaining step 205 to step 209 are performed.

The preset time may be set to very short, for example, 200 ms. That is, step 203 to step 209 are performed every 200 ms. In this way, the mobile terminal may perform an operation at the same time when the user blows air. In an example in which the displayed content moves from bottom to top, the displayed content of the mobile terminal may move from bottom to top at the same time when the user blows air, and when the user stops blowing air, the displayed content of the mobile terminal also stops moving. This is more convenient for the user to control an operation process.

This embodiment of the present invention provides a method for operating a mobile terminal based on a blowing action. The mobile terminal is provided with at least two microphones. When a user bows air to the at least two microphones, characteristic parameters of sound signals received by the at least two microphones are separately obtained. The characteristics parameter includes a start moment, input duration, or sound loudness of the sound signal. An operation type (and an operation distance) is determined according to the obtained characteristic parameters of the sound signals received by the at least two microphones. An operation instruction is generated according to the operation type (and the operation distance). An operation that corresponds to the operation instruction is performed. Therefore, a mobile terminal can be operated by using microphones on the mobile terminal, thereby simplifying an existing operation mode and improving man-machine interaction efficiency.

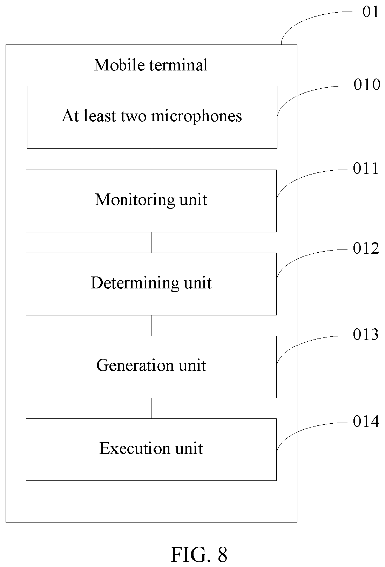

An embodiment of the present invention provides a mobile terminal 01. The mobile terminal 01 includes at least two microphones 010. As shown in FIG. 8, the mobile terminal 01 further includes:
a monitoring unit 011, configured to separately obtain characteristic parameters of sound signals received by the at least two microphones 010;
a determining unit 012, configured to determine an operation type according to the obtained characteristic parameters of the sound signals received by the at least two microphones 010;
a generation unit 013, configured to generate an operation instruction according to the operation type; and
an execution unit 014, configured to perform an operation that corresponds to the operation instruction.

Optionally, the characteristics parameter of the sound signal includes at least one of a start moment, input duration, or sound loudness of the sound signal received by the microphone.

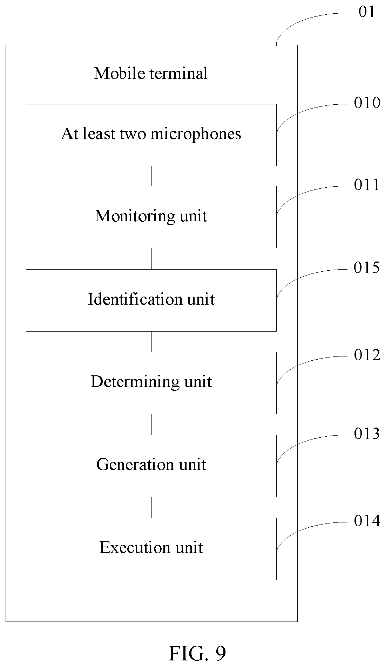

Optionally, as shown in FIG. 9, the mobile terminal 01 further includes:
an identification unit 015, configured to determine, according to relevancy between the characteristic parameters of the sound signals received by the at least two microphones 010, whether the sound signals received by the at least two microphones 010 are sound signals of a blown airflow; and
when it is determined that the sound signals received by the at least two microphones 010 are sound signals of a blown airflow, the determining unit 012 performs the operation of determining an operation type according to the obtained characteristic parameters of the sound signals received by the at least two microphones 010.

Optionally, the at least two microphones 010 include a first microphone and a second microphone; and if the characteristics parameter of the sound signal includes the start moment, the input duration, and the sound loudness of the sound signal received by the microphone, when determining the operation type according to the obtained characteristic parameters of the sound signals received by the at least two microphones 010, the determining unit 012 is specifically configured to:
if a start moment of a first sound signal received by the first microphone is earlier than a start moment of a second sound signal received by the second microphone, and sound loudness of the first sound signal is greater than sound loudness of the second sound signal, determine that the operation type is a first operation; or
if a start moment of a second sound signal received by the second microphone is earlier than a start moment of a first sound signal received by the first microphone, and sound loudness of the second sound signal is greater than sound loudness of the first sound signal, determine that the operation type is a second operation.

Optionally, the determining unit 012 is further configured to: determine, according to the obtained characteristic parameters of the sound signals received by the at least two microphones 010, an operation distance that corresponds to the operation type; and
correspondingly, the generation unit 013 is specifically configured to: generate the operation instruction according to the operation type and the operation distance.

Optionally, if the first microphone is a microphone disposed on the top of the mobile terminal 01 and the second microphone is a microphone disposed at the bottom of the mobile terminal 01, the first operation includes: a movement of displayed content of the mobile terminal 01 from top to bottom, and the second operation includes: a movement of the displayed content of the mobile terminal 01 from bottom to top; or
if the first microphone is a microphone disposed on the left of the mobile terminal 01 and the second microphone is a microphone disposed on the right of the mobile terminal 01, the first operation includes: a movement of displayed content of the mobile terminal 01 from left to right, and the second operation includes: a movement of the displayed content of the mobile terminal 01 from right to left.

Optionally, if the first microphone is a microphone disposed on the top of the mobile terminal 01 and the second microphone is a microphone disposed at the bottom of the mobile terminal 01, an operation distance that corresponds to the first operation is a distance by which the displayed content of the mobile terminal 01 moves from top to bottom, and an operation distance that corresponds to the second operation is a distance by which the displayed content of the mobile terminal 01 moves from bottom to top; or
if the first microphone is a microphone disposed on the left of the mobile terminal 01 and the second microphone is a microphone disposed on the right of the mobile terminal 01, an operation distance that corresponds to the first operation is a distance by which the displayed content of the mobile terminal 01 moves from left to right, and an operation distance that corresponds to the second operation is a distance by which the displayed content of the mobile terminal 01 moves from right to left.

Optionally, if the first microphone is a microphone disposed on the top of the mobile terminal 01 and the second microphone is a microphone disposed at the bottom of the mobile terminal 01, the first operation includes: a page up operation, or an operation of sliding from top to bottom to unblock, or a back operation; and the second operation includes: a page down operation, or an operation of sliding from bottom to top to unblock, or a forward operation; or
if the first microphone is a microphone disposed on the left of the mobile terminal 01 and the second microphone is a microphone disposed on the right of the mobile terminal 01, the first operation includes: a page up operation, or an operation of sliding from left to right to unblock, or a back operation; and the second operation includes: an operation of sliding from right to left to unblock, or a page down operation, or a forward operation.

This embodiment is used for implementation of the foregoing method embodiments. For a working procedure and a working principle of the units in this embodiment, refer to descriptions in the foregoing method embodiments. Details are not described herein again.

This embodiment of the present invention provides a mobile terminal. The mobile terminal is provided with at least two microphones. When a user bows air to the at least two microphones, characteristic parameters of sound signals received by the at least two microphones are separately obtained. The characteristics parameter includes a start moment, input duration, or sound loudness of the sound signal. An operation type (and an operation distance) is determined according to the obtained characteristic parameters of the sound signals received by the at least two microphones. An operation instruction is generated according to the operation type (and the operation distance). An operation that corresponds to the operation instruction is performed. Therefore, a mobile terminal can be operated by using microphones on the mobile terminal, thereby simplifying an existing operation mode and improving man-machine interaction efficiency.

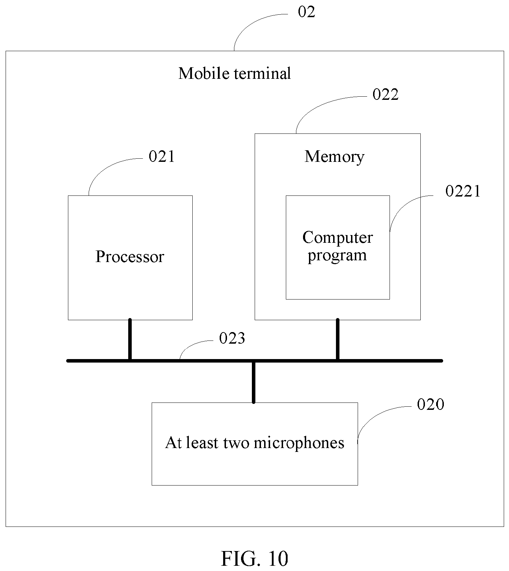

An embodiment of the present invention further provides another mobile terminal 02. The mobile terminal includes at least two microphones 020. As shown in FIG. 10, the mobile terminal 02 further includes: a processor 021 and a memory 022. The processor 021, the at least two microphones 020, and the memory 022 are connected by using a bus 023. The memory 022 is configured to store a computer program 0221. The processor 021 is configured to perform the computer program 0221. The processor 021 performs the computer program 0221 to:
separately obtain characteristic parameters of sound signals received by the at least two microphones 020;
determine an operation type according to the obtained characteristic parameters of the sound signals received by the at least two microphones 020;
generate an operation instruction according to the operation type; and
perform an operation that corresponds to the operation instruction.

Optionally, the characteristics parameter of the sound signal includes at least one of a start moment, input duration, or sound loudness of the sound signal received by the microphone.

Optionally, the processor 021 performs the computer program 0221 to, further:
determine, according to relevancy between the characteristic parameters of the sound signals received by the at least two microphones 020, whether the sound signals received by the at least two microphones 020 are sound signals of a blown airflow; and
when it is determined that the sound signals received by the at least two microphones 020 are sound signals of a blown airflow, perform the operation of determining an operation type according to the obtained characteristic parameters of the sound signals received by the at least two microphones 020.

Optionally, the at least two microphones 020 include a first microphone and a second microphone; and if the characteristics parameter of the sound signal includes the start moment, the input duration, and the sound loudness of the sound signal received by the microphone, the processor 021 performs the computer program 0221 to, specifically:
if a start moment of a first sound signal received by the first microphone is earlier than a start moment of a second sound signal received by the second microphone, and sound loudness of the first sound signal is greater than sound loudness of the second sound signal, determine that the operation type is a first operation; or
if a start moment of a second sound signal received by the second microphone is earlier than a start moment of a first sound signal received by the first microphone, and sound loudness of the second sound signal is greater than sound loudness of the first sound signal, determine that the operation type is a second operation.

Optionally, the processor 021 performs the computer program 0221 to, further:
determine, according to the obtained characteristic parameters of the sound signals received by the at least two microphones 020, an operation distance that corresponds to the operation type; and
the generating an operation instruction according to the operation type includes: generating the operation instruction according to the operation type and the operation distance.

Optionally, if the first microphone is a microphone disposed on the top of the mobile terminal 02 and the second microphone is a microphone disposed at the bottom of the mobile terminal 02, the first operation includes: a movement of displayed content of the mobile terminal 02 from top to bottom, and the second operation includes: a movement of the displayed content of the mobile terminal 02 from bottom to top; or
if the first microphone is a microphone disposed on the left of the mobile terminal 02 and the second microphone is a microphone disposed on the right of the mobile terminal 02, the first operation includes: a movement of displayed content of the mobile terminal 02 from left to right, and the second operation includes: a movement of the displayed content of the mobile terminal 02 from right to left.

Optionally, if the first microphone is a microphone disposed on the top of the mobile terminal 02 and the second microphone is a microphone disposed at the bottom of the mobile terminal 02, an operation distance that corresponds to the first operation is a distance by which the displayed content of the mobile terminal 02 moves from top to bottom, and an operation distance that corresponds to the second operation is a distance by which the displayed content of the mobile terminal 02 moves from bottom to top; or
if the first microphone is a microphone disposed on the left of the mobile terminal 02 and the second microphone is a microphone disposed on the right of the mobile terminal 02, an operation distance that corresponds to the first operation is a distance by which the displayed content of the mobile terminal 02 moves from left to right, and an operation distance that corresponds to the second operation is a distance by which the displayed content of the mobile terminal 02 moves from right to left.

Optionally, if the first microphone is a microphone disposed on the top of the mobile terminal 02 and the second microphone is a microphone disposed at the bottom of the mobile terminal 02, the first operation includes: a page up operation, or an operation of sliding from top to bottom to unblock, or a back operation; and the second operation includes: a page down operation, or an operation of sliding from bottom to top to unblock, or a forward operation; or
if the first microphone is a microphone disposed on the left of the mobile terminal 02 and the second microphone is a microphone disposed on the right of the mobile terminal 02, the first operation includes: a page up operation, or an operation of sliding from left to right to unblock, or a back operation; and the second operation includes: an operation of sliding from right to left to unblock, or a page down operation, or a forward operation.

This embodiment is used for implementation of the foregoing method embodiments. For a working procedure and a working principle of the units in this embodiment, refer to descriptions in the foregoing method embodiments. Details are not described herein again.

This embodiment of the present invention provides a mobile terminal. The mobile terminal is provided with at least two microphones. When a user bows air to the at least two microphones, characteristic parameters of sound signals received by the at least two microphones are separately obtained. The characteristics parameter includes a start moment, input duration, or sound loudness of the sound signal. An operation type (and an operation distance) is determined according to the obtained characteristic parameters of the sound signals received by the at least two microphones. An operation instruction is generated according to the operation type (and the operation distance). An operation that corresponds to the operation instruction is performed. Therefore, a mobile terminal can be operated by using microphones on the mobile terminal, thereby simplifying an existing operation mode and improving man-machine interaction efficiency.

In the several embodiments provided in the present invention, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or part of the functions described above. For a detailed working process of the foregoing apparatus, reference may be made to a corresponding process in the foregoing method embodiments, and details are not described herein again.

Finally, it should be noted that the foregoing embodiments are merely intended for describing the technical solutions of the present invention, but not for limiting the present invention.

## Claims

1. A method for operating a mobile terminal based on a blowing action, wherein the mobile terminal comprises at least two microphones, and the method comprises:
separately obtaining (S101, S204) characteristic parameters of sound signals received by the at least two microphones;
determining (S102) an operation type according to the obtained characteristic parameters of the sound signals received by the at least two microphones;
generating (S103) an operation instruction according to the operation type; and
performing (S104) an operation that corresponds to the operation instruction;
wherein the characteristics parameter of the sound signal comprises at least one of a start moment, input duration, or sound loudness of the sound signal received by the microphone, wherein the method further comprises:
determining, according to relevancy between the characteristic parameters of the sound signals received by the at least two microphones, whether the sound signals received by the at least two microphones are sound signals of a blown airflow; and
when it is determined that the sound signals received by the at least two microphones are sound signals of a blown airflow, performing the operation of determining (S206) an operation type according to the obtained characteristic parameters of the sound signals received by the at least two microphones;
the method being **characterized by**
determining (S207), according to the obtained characteristic parameters of the sound signals received by the at least two microphones, an operation distance that corresponds to the operation type; and
the generating (S103) an operation instruction according to the operation type comprises: generating (S208) the operation instruction according to the operation type and the operation distance.

2. The method according to claim 1, wherein the at least two microphones comprise a first microphone and a second microphone; and
if the characteristics parameter of the sound signal comprises the start moment, the input duration, and the sound loudness of the sound signal received by the microphone, the determining (S206) a corresponding operation type according to the obtained characteristic parameters of the sound signals received by the at least two microphones comprises:
if a start moment of a first sound signal received by the first microphone is earlier than a start moment of a second sound signal received by the second microphone, and sound loudness of the first sound signal is greater than sound loudness of the second sound signal, determining (S206) that the operation type is a first operation; or
if a start moment of a second sound signal received by the second microphone is earlier than a start moment of a first sound signal received by the first microphone, and sound loudness of the second sound signal is greater than sound loudness of the first sound signal, determining (S206) that the operation type is a second operation.

3. The method according to claim 1 or 2, wherein if the first microphone is a microphone disposed on the top of the mobile terminal and the second microphone is a microphone disposed at the bottom of the mobile terminal, the first operation comprises: a movement of displayed content of the mobile terminal from top to bottom, and the second operation comprises: a movement of the displayed content of the mobile terminal from bottom to top; or
if the first microphone is a microphone disposed on the left of the mobile terminal and the second microphone is a microphone disposed on the right of the mobile terminal, the first operation comprises: a movement of displayed content of the mobile terminal from left to right, and the second operation comprises: a movement of the displayed content of the mobile terminal from right to left.

4. The method according to claim 3, wherein if the first microphone is a microphone disposed on the top of the mobile terminal and the second microphone is a microphone disposed at the bottom of the mobile terminal, an operation distance that corresponds to the first operation is a distance by which the displayed content of the mobile terminal moves from top to bottom, and an operation distance that corresponds to the second operation is a distance by which the displayed content of the mobile terminal moves from bottom to top; or
if the first microphone is a microphone disposed on the left of the mobile terminal and the second microphone is a microphone disposed on the right of the mobile terminal, an operation distance that corresponds to the first operation is a distance by which the displayed content of the mobile terminal moves from left to right, and an operation distance that corresponds to the second operation is a distance by which the displayed content of the mobile terminal moves from right to left.

5. The method according to claim 1 or 2, wherein if the first microphone is a microphone disposed on the top of the mobile terminal and the second microphone is a microphone disposed at the bottom of the mobile terminal, the first operation comprises: a page up operation, or an operation of sliding from top to bottom to unblock, or a back operation; and the second operation comprises: a page down operation, or an operation of sliding from bottom to top to unblock, or a forward operation; or
if the first microphone is a microphone disposed on the left of the mobile terminal and the second microphone is a microphone disposed on the right of the mobile terminal, the first operation comprises: a page up operation, or an operation of sliding from left to right to unblock, or a back operation; and the second operation comprises: an operation of sliding from right to left to unblock, or a page down operation, or a forward operation.

6. Amobile terminal (01), wherein the mobile terminal comprises at least two microphones (10), and the mobile terminal further comprises:
a monitoring unit (011), configured to separately obtain characteristic parameters of sound signals received by the at least two microphones (10);
a determining unit (012), configured to determine an operation type according to the obtained characteristic parameters of the sound signals received by the at least two microphones (10);
a generation unit (013), configured to generate an operation instruction according to the operation type; and
an execution unit (014), configured to perform an operation that corresponds to the operation instruction;
wherein the characteristics parameter of the sound signal comprises at least one of a start moment, input duration, or sound loudness of the sound signal received by the microphone, wherein the mobile terminal further comprises:
an identification unit (015), configured to determine, according to relevancy between the characteristic parameters of the sound signals received by the at least two microphones (10), whether the sound signals received by the at least two microphones (10) are sound signals of a blown airflow; and
when it is determined that the sound signals received by the at least two microphones (10) are sound signals of a blown airflow, the determining unit (012) performs the operation of determining an operation type according to the obtained characteristic parameters of the sound signals received by the at least two microphones (10);
the mobile terminal being **characterized in that** the determining unit (012) is further configured to:
determine, according to the obtained characteristic parameters of the sound signals received by the at least two microphones (10), an operation distance that corresponds to the operation type; and
the generating an operation instruction according to the operation type comprises: generating the operation instruction according to the operation type and the operation distance.

7. The mobile terminal according to claim 6, wherein the at least two microphones (10) comprise a first microphone and a second microphone; and if the characteristics parameter of the sound signal comprises the start moment, the input duration, and the sound loudness of the sound signal received by the microphone, the determining unit (012) is specifically configured to:
if a start moment of a first sound signal received by the first microphone is earlier than a start moment of a second sound signal received by the second microphone, and sound loudness of the first sound signal is greater than sound loudness of the second sound signal, determine that the operation type is a first operation; or
if a start moment of a second sound signal received by the second microphone is earlier than a start moment of a first sound signal received by the first microphone, and sound loudness of the second sound signal is greater than sound loudness of the first sound signal, determine that the operation type is a second operation.

8. The mobile terminal according to claim 6 or 7, wherein if the first microphone is a microphone disposed on the top of the mobile terminal and the second microphone is a microphone disposed at the bottom of the mobile terminal, the first operation comprises: a movement of displayed content of the mobile terminal from top to bottom, and the second operation comprises: a movement of the displayed content of the mobile terminal from bottom to top; or
if the first microphone is a microphone disposed on the left of the mobile terminal and the second microphone is a microphone disposed on the right of the mobile terminal, the first operation comprises: a movement of displayed content of the mobile terminal from left to right, and the second operation comprises: a movement of the displayed content of the mobile terminal from right to left.

9. The mobile terminal according to claim 8, wherein if the first microphone is a microphone disposed on the top of the mobile terminal and the second microphone is a microphone disposed at the bottom of the mobile terminal, an operation distance that corresponds to the first operation is a distance by which the displayed content of the mobile terminal moves from top to bottom, and an operation distance that corresponds to the second operation is a distance by which the displayed content of the mobile terminal moves from bottom to top; or
if the first microphone is a microphone disposed on the left of the mobile terminal and the second microphone is a microphone disposed on the right of the mobile terminal, an operation distance that corresponds to the first operation is a distance by which the displayed content of the mobile terminal moves from left to right, and an operation distance that corresponds to the second operation is a distance by which the displayed content of the mobile terminal moves from right to left.

## Patentansprüche

1. Verfahren zum Betreiben eines mobilen Endgeräts basierend auf einer Blasaktion, wobei das mobile Endgerät mindestens zwei Mikrofone umfasst, und das Verfahren umfasst:
getrenntes Erhalten (S101, S204) charakteristischer Parameter von Schallsignalen, die von den mindestens zwei Mikrofonen empfangen werden;
Bestimmen (S102) einer Betriebsart gemäß den erhaltenen charakteristischen Parametern der Schallsignale, die von den mindestens zwei Mikrofonen empfangen werden;
Erzeugen (S103) einer Betriebsanweisung gemäß der Betriebsart; und
Durchführen (S104) eines Betriebs, der der Betriebsanweisung entspricht;
wobei der charakteristische Parameter des Schallsignals einen Startzeitpunkt und/oder eine Eingabedauer und/oder eine Lautstärke des von dem Mikrofon empfangenen Schallsignals umfasst, wobei das Verfahren ferner umfasst:
Bestimmen, gemäß der Relevanz zwischen den charakteristischen Parametern der von den mindestens zwei Mikrofonen empfangenen Schallsignale, ob die von den mindestens zwei Mikrofonen empfangenen Schallsignale Schallsignale eines geblasenen Luftstroms sind; und
wenn bestimmt wird, dass die von den mindestens zwei Mikrofonen empfangenen Schallsignale Schallsignale eines geblasenen Luftstroms sind, Durchführen des Betriebs zum Bestimmen (S206) einer Betriebsart gemäß den erhaltenen charakteristischen Parametern der von den mindestens zwei Mikrofonen empfangenen Schallsignale;
wobei das Verfahren **gekennzeichnet ist durch**
Bestimmen (S207) eines Betriebsabstands, der der Betriebsart entspricht, gemäß den erhaltenen charakteristischen Parametern der von den mindestens zwei Mikrofonen empfangenen Schallsignale; und
das Erzeugen (S103) einer Betriebsanweisung gemäß der Betriebsart umfasst: Erzeugen (S208) der Betriebsanweisung gemäß der Betriebsart und dem Betriebsabstand.

2. Verfahren nach Anspruch 1, wobei die mindestens zwei Mikrofone ein erstes Mikrofon und ein zweites Mikrofon umfassen; und
wenn der charakteristische Parameter des Schallsignals den Startzeitpunkt, die Eingabedauer und die Lautstärke des von dem Mikrofon empfangenen Schallsignals umfasst, das Bestimmen (S206) einer entsprechenden Betriebsart gemäß den erhaltenen charakteristischen Parametern der von den mindestens zwei Mikrofonen empfangenen Schallsignale umfasst:
wenn ein Startzeitpunkt eines von dem ersten Mikrofon empfangenen ersten Schallsignals vor einem Startzeitpunkt eines von dem zweiten Mikrofon empfangenen zweiten Schallsignals liegt und die Lautstärke des ersten Schallsignals größer ist als die Lautstärke des zweiten Schallsignals, Bestimmen (S206), dass die Betriebsart ein erster Betrieb ist; oder
wenn ein Startzeitpunkt eines von dem zweiten Mikrofon empfangenen zweiten Schallsignals vor einem Startzeitpunkt eines von dem ersten Mikrofon empfangenen ersten Schallsignals liegt und die Lautstärke des zweiten Schallsignals größer ist als die Lautstärke des ersten Schallsignals, Bestimmen (S206), dass die Betriebsart ein zweiter Betrieb ist.

3. Verfahren nach Anspruch 1 oder 2, wobei, wenn das erste Mikrofon ein Mikrofon ist, das an der Oberseite des mobilen Endgeräts angeordnet ist, und das zweite Mikrofon ein Mikrofon ist, das an der Unterseite des mobilen Endgeräts angeordnet ist, der erste Betrieb umfasst: eine Bewegung des angezeigten Inhalts des mobilen Endgeräts von oben nach unten, und der zweite Betrieb umfasst: eine Bewegung des angezeigten Inhalts des mobilen Endgeräts von unten nach oben; oder
wenn das erste Mikrofon ein Mikrofon ist, das auf der linken Seite des mobilen Endgeräts angeordnet ist, und das zweite Mikrofon ein Mikrofon ist, das auf der rechten Seite des mobilen Endgeräts angeordnet ist, umfasst der erste Betrieb: eine Bewegung des angezeigten Inhalts des mobilen Endgeräts von links nach rechts, und der zweite Betrieb umfasst: eine Bewegung des angezeigten Inhalts des mobilen Endgeräts von rechts nach links.

4. Verfahren nach Anspruch 3, wobei, wenn das erste Mikrofon ein Mikrofon ist, das an der Oberseite des mobilen Endgeräts angeordnet ist, und das zweite Mikrofon ein Mikrofon ist, das an der Unterseite des mobilen Endgeräts angeordnet ist, ein Betriebsabstand, der dem ersten Betrieb entspricht, ein Abstand ist, um den sich der angezeigte Inhalt des mobilen Endgeräts von oben nach unten bewegt, und ein Betriebsabstand, der dem zweiten Betrieb entspricht, ein Abstand ist, um den sich der angezeigte Inhalt des mobilen Endgeräts von unten nach oben bewegt; oder
wenn das erste Mikrofon ein Mikrofon ist, das auf der linken Seite des mobilen Endgeräts angeordnet ist, und das zweite Mikrofon ein Mikrofon ist, das auf der rechten Seite des mobilen Endgeräts angeordnet ist, ist ein Betriebsabstand, der dem ersten Betrieb entspricht, ein Abstand, um den sich der angezeigte Inhalt des mobilen Endgeräts von links nach rechts bewegt, und ein Betriebsabstand, der dem zweiten Betrieb entspricht, ein Abstand, um den sich der angezeigte Inhalt des mobilen Endgeräts von rechts nach links bewegt.

5. Verfahren nach Anspruch 1 oder 2, wobei, wenn das erste Mikrofon ein Mikrofon ist, das an der Oberseite des mobilen Endgeräts angeordnet ist, und das zweite Mikrofon ein Mikrofon ist, das an der Unterseite des mobilen Endgeräts angeordnet ist, der erste Betrieb umfasst: einen "Page-up"-Betrieb oder einen Betrieb des Gleitens von oben nach unten zum Entsperren, oder einen Rückwärtsbetrieb; und der zweite Betrieb umfasst: einen "Page-down"-Betrieb oder einen Betrieb des Gleitens von unten nach oben zum Entsperren, oder einen Vorwärtsbetrieb; oder
wenn das erste Mikrofon ein Mikrofon ist, das auf der linken Seite des mobilen Endgeräts angeordnet ist, und das zweite Mikrofon ein Mikrofon ist, das auf der rechten Seite des mobilen Endgeräts angeordnet ist, umfasst der erste Betrieb: einen "Page-up"-Betrieb oder einen Betrieb des Gleitens von links nach rechts zum Entsperren oder einen Rückwärtsbetrieb; und der zweite Betrieb umfasst: einen Betrieb des Gleitens von rechts nach links zum Entsperren oder einen "Page-down"-Betrieb oder einen Vorwärtsbetrieb.

6. Mobiles Endgerät (01), wobei das mobile Endgerät mindestens zwei Mikrofone (10) umfasst, und das mobile Endgerät ferner umfasst:
eine Überwachungseinheit (011), die dazu konfiguriert ist, charakteristische Parameter von Schallsignalen, die von den mindestens zwei Mikrofonen (10) empfangen werden, getrennt zu erhalten;
eine Bestimmungseinheit (012), die dazu konfiguriert ist, eine Betriebsart gemäß den erhaltenen charakteristischen Parametern der von den mindestens zwei Mikrofonen (10) empfangenen Schallsignale zu bestimmen;
eine Erzeugungseinheit (013), die dazu konfiguriert ist, eine Betriebsanweisung gemäß der Betriebsart zu erzeugen; und
eine Ausführungseinheit (014), die dazu konfiguriert ist, einen Betrieb durchzuführen, der der Betriebsanweisung entspricht;
wobei der charakteristische Parameter des Schallsignals einen Startzeitpunkt und/oder eine Eingabedauer und/oder eine Lautstärke des von dem Mikrofon empfangenen Schallsignals umfasst, wobei das mobile Endgerät ferner umfasst:
eine Identifikationseinheit (015), die dazu konfiguriert ist, zu bestimmen, gemäß der Relevanz zwischen den charakteristischen Parametern der von den mindestens zwei Mikrofonen (10) empfangenen Schallsignale, ob die von den mindestens zwei Mikrofonen (10) empfangenen Schallsignale Schallsignale eines geblasenen Luftstroms sind; und
wenn bestimmt wird, dass die von den mindestens zwei Mikrofonen (10) empfangenen Schallsignale Schallsignale eines geblasenen Luftstroms sind, die Bestimmungseinheit (012) den Betrieb zum Bestimmen einer Betriebsart gemäß den erhaltenen charakteristischen Parametern der von den mindestens zwei Mikrofonen (10) empfangenen Schallsignale durchführt;
das mobile Endgerät **dadurch gekennzeichnet ist, dass**
die Bestimmungseinheit (012) ferner dazu konfiguriert ist:
gemäß den erhaltenen charakteristischen Parametern der von den mindestens zwei Mikrofonen (10) empfangenen Schallsignale einen Betriebsabstand zu bestimmen, der der Betriebsart entspricht; und
das Erzeugen einer Betriebsanweisung gemäß der Betriebsart umfasst:
Erzeugen der Betriebsanweisung gemäß der Betriebsart und des Betriebsabstands.

7. Mobiles Endgerät nach Anspruch 6, wobei die mindestens zwei Mikrofone (10) ein erstes Mikrofon und ein zweites Mikrofon umfassen; und wenn der charakteristische Parameter des Schallsignals den Startzeitpunkt, die Eingangsdauer und die Lautstärke des vom Mikrofon empfangenen Schallsignals umfasst, die Bestimmungseinheit (012) insbesondere dazu konfiguriert ist:
wenn ein Startzeitpunkt eines von dem ersten Mikrofon empfangenen ersten Schallsignals vor einem Startzeitpunkt eines von dem zweiten Mikrofon empfangenen zweiten Schallsignals liegt und die Lautstärke des ersten Schallsignals größer ist als die Lautstärke des zweiten Schallsignals, zu bestimmen, dass die Betriebsart ein erster Betrieb ist; oder
wenn ein Startzeitpunkt eines von dem zweiten Mikrofon empfangenen zweiten Schallsignals vor einem Startzeitpunkt eines von dem ersten Mikrofon empfangenen ersten Schallsignals liegt und die Lautstärke des zweiten Schallsignals größer ist als die Lautstärke des ersten Schallsignals, zu bestimmen, dass die Betriebsart ein zweiter Betrieb ist.

8. Mobiles Endgerät nach Anspruch 6 oder 7, wobei, wenn das erste Mikrofon ein Mikrofon ist, das an der Oberseite des mobilen Endgeräts angeordnet ist, und das zweite Mikrofon ein Mikrofon ist, das an der Unterseite des mobilen Endgeräts angeordnet ist, der erste Betrieb umfasst: eine Bewegung des angezeigten Inhalts des mobilen Endgeräts von oben nach unten, und der zweite Betrieb umfasst: eine Bewegung des angezeigten Inhalts des mobilen Endgeräts von unten nach oben; oder wenn das erste Mikrofon ein Mikrofon ist, das auf der linken Seite des mobilen Endgeräts angeordnet ist, und das zweite Mikrofon ein Mikrofon ist, das auf der rechten Seite des mobilen Endgeräts angeordnet ist, umfasst der erste Betrieb: eine Bewegung des angezeigten Inhalts des mobilen Endgeräts von links nach rechts, und der zweite Betrieb umfasst: eine Bewegung des angezeigten Inhalts des mobilen Endgeräts von rechts nach links.

9. Mobiles Endgerät nach Anspruch 8, wobei, wenn das erste Mikrofon ein Mikrofon ist, das an der Oberseite des mobilen Endgeräts angeordnet ist, und das zweite Mikrofon ein Mikrofon ist, das an der Unterseite des mobilen Endgeräts angeordnet ist, ein Betriebsabstand, der dem ersten Betrieb entspricht, ein Abstand ist, um den sich der angezeigte Inhalt des mobilen Endgeräts von oben nach unten bewegt, und ein Betriebsabstand, der dem zweiten Betrieb entspricht, ein Abstand ist, um den sich der angezeigte Inhalt des mobilen Endgeräts von unten nach oben bewegt; oder
wenn das erste Mikrofon ein Mikrofon ist, das auf der linken Seite des mobilen Endgeräts angeordnet ist, und das zweite Mikrofon ein Mikrofon ist, das auf der rechten Seite des mobilen Endgeräts angeordnet ist, ist ein Betriebsabstand, der dem ersten Betrieb entspricht, ein Abstand, um den sich der angezeigte Inhalt des mobilen Endgeräts von links nach rechts bewegt, und ein Betriebsabstand, der dem zweiten Betrieb entspricht, ein Abstand, um den sich der angezeigte Inhalt des mobilen Endgeräts von rechts nach links bewegt.

## Revendications

1. Procédé de fonctionnement d'un terminal mobile basé sur une action de soufflage, dans lequel le terminal mobile comprend au moins deux microphones, et le procédé comprend les étapes consistant à :
obtenir séparément (S101, S204) des paramètres de caractéristiques de signaux sonores reçus par les au moins deux microphones ;
déterminer (S102) un type d'opération en fonction des paramètres de caractéristiques obtenus des signaux sonores reçus par les au moins deux microphones ;
générer (S103) une instruction d'opération en fonction du type d'opération ; et
effectuer (S104) une opération qui correspond à l'instruction d'opération ;
dans lequel le paramètre de caractéristiques du signal sonore comprend au moins l'un d'un moment de début, d'une durée d'entrée, ou d'une intensité sonore du signal sonore reçu par le microphone, dans lequel le procédé comprend en outre les étapes consistant à :
déterminer, selon la pertinence entre les paramètres de caractéristiques des signaux sonores reçus par les au moins deux microphones, si les signaux sonores reçus par les au moins deux microphones sont des signaux sonores d'un flux d'air soufflé ; et
lorsqu'il est déterminé que les signaux sonores reçus par les au moins deux microphones sont des signaux sonores d'un flux d'air soufflé, effectuer l'opération consistant à déterminer (S206) un type d'opération en fonction des paramètres de caractéristiques obtenus des signaux sonores reçus par les au moins deux microphones ;
le procédé étant **caractérisé par** le fait de
déterminer (S207), en fonction des paramètres de caractéristiques obtenus des signaux sonores reçus par les au moins deux microphones, une distance d'opération qui correspond au type d'opération ; et
la génération (S103) d'une instruction d'opération en fonction du type d'opération comprend l'étape consistant à : générer (S208) l'instruction d'opération en fonction du type d'opération et de la distance d'opération.

2. Procédé selon la revendication 1, dans lequel les au moins deux microphones comprennent un premier microphone et un deuxième microphone ; et
si le paramètre de caractéristiques du signal sonore comprend le moment de début, la durée d'entrée, et l'intensité sonore du signal sonore reçu par le microphone, la détermination (S206) d'un type d'opération correspondant en fonction des paramètres de caractéristiques obtenus des signaux sonores reçus par les au moins deux microphones comprend l'étape consistant à :
si un moment de début d'un premier signal sonore reçu par le premier microphone est antérieur à un moment de début d'un deuxième signal sonore reçu par le deuxième microphone, et si l'intensité sonore du premier signal sonore est supérieure à l'intensité sonore du deuxième signal sonore, déterminer (S206) que le type d'opération est une première opération ; ou
si un moment de début d'un deuxième signal sonore reçu par le deuxième microphone est antérieur à un moment de début d'un premier signal sonore reçu par le premier microphone, et si l'intensité sonore du deuxième signal sonore est supérieure à l'intensité sonore du premier signal sonore, déterminer (S206) que le type d'opération est une deuxième opération.

3. Procédé selon la revendication 1 ou 2, dans lequel si le premier microphone est un microphone disposé en haut du terminal mobile et le deuxième microphone est un microphone disposé en bas du terminal mobile, la première opération comprend : un mouvement du contenu affiché du terminal mobile de haut en bas, et la deuxième opération comprend : un mouvement du contenu affiché du terminal mobile de bas en haut ; ou
si le premier microphone est un microphone disposé à gauche du terminal mobile et le deuxième microphone est un microphone disposé à droite du terminal mobile, la première opération comprend : un mouvement du contenu affiché du terminal mobile de gauche à droite, et la deuxième opération comprend : un mouvement du contenu affiché du terminal mobile de droite à gauche.

4. Procédé selon la revendication 3, dans lequel si le premier microphone est un microphone disposé en haut du terminal mobile et le deuxième microphone est un microphone disposé en bas du terminal mobile, une distance d'opération qui correspond à la première opération est une distance par laquelle le contenu affiché du terminal mobile se déplace de haut en bas, et une distance d'opération qui correspond à la deuxième opération est une distance par laquelle le contenu affiché du terminal mobile se déplace de bas en haut ; ou
si le premier microphone est un microphone disposé à gauche du terminal mobile et le deuxième microphone est un microphone disposé à droite du terminal mobile, une distance d'opération qui correspond à la première opération est une distance par laquelle le contenu affiché du terminal mobile se déplace de gauche à droite, et une distance d'opération qui correspond à la deuxième opération est une distance par laquelle le contenu affiché du terminal mobile se déplace de droite à gauche.

5. Procédé selon la revendication 1 ou 2, dans lequel si le premier microphone est un microphone disposé en haut du terminal mobile et le deuxième microphone est un microphone disposé en bas du terminal mobile, la première opération comprend : une opération de page précédente, ou une opération de glissement de haut en bas pour débloquer, ou une opération de retour ; et la deuxième opération comprend : une opération de page suivante, ou une opération de glissement de bas en haut pour débloquer, ou une opération d'avance ; ou
si le premier microphone est un microphone disposé à gauche du terminal mobile et le deuxième microphone est un microphone disposé à droite du terminal mobile, la première opération comprend : une opération de page précédente, ou une opération de glissement de gauche à droite pour débloquer, ou une opération de retour ; et la deuxième opération comprend : une opération de glissement de droite à gauche pour débloquer, ou une opération de page suivante, ou une opération d'avance.

6. Terminal mobile (01), dans lequel le terminal mobile comprend au moins deux microphones (10), et le terminal mobile comprend en outre :
une unité de surveillance (011), configurée pour obtenir séparément des paramètres de caractéristiques de signaux sonores reçus par les au moins deux microphones (10) ;
une unité de détermination (012), configurée pour déterminer un type d'opération en fonction des paramètres de caractéristiques obtenus des signaux sonores reçus par les au moins deux microphones (10) ;
une unité de génération (013), configurée pour générer une instruction d'opération en fonction du type d'opération ; et
une unité d'exécution (014), configurée pour effectuer une opération qui correspond à l'instruction d'opération ;
dans lequel le paramètre de caractéristiques du signal sonore comprend au moins l'un d'un moment de début, d'une durée d'entrée, ou d'une intensité sonore du signal sonore reçu par le microphone, dans lequel le terminal mobile comprend en outre :
une unité d'identification (015), configurée pour déterminer, en fonction de la pertinence entre les paramètres de caractéristiques des signaux sonores reçus par les au moins deux microphones (10), si les signaux sonores reçus par les au moins deux microphones (10) sont des signaux sonores d'un flux d'air soufflé ; et
lorsqu'il est déterminé que les signaux sonores reçus par les au moins deux microphones (10) sont des signaux sonores d'un flux d'air soufflé, l'unité de détermination (012) effectue l'opération de détermination d'un type d'opération en fonction des paramètres de caractéristiques obtenus des signaux sonores reçus par les au moins deux microphones (10) ;
le terminal mobile étant **caractérisé en ce que**
l'unité de détermination (012) est en outre configurée pour :
déterminer, en fonction des paramètres de caractéristiques obtenus des signaux sonores reçus par les au moins deux microphones (10), une distance d'opération qui correspond au type d'opération ; et
la génération d'une instruction d'opération en fonction du type d'opération comprend l'étape consistant à :
générer l'instruction d'opération en fonction du type d'opération et de la distance d'opération.

7. Terminal mobile selon la revendication 6, dans lequel les au moins deux microphones (10) comprennent un premier microphone et un deuxième microphone ; et si le paramètre de caractéristiques du signal sonore comprend le moment de début, la durée d'entrée, et l'intensité sonore du signal sonore reçu par le microphone, l'unité de détermination (012) est spécifiquement configurée pour :
si un moment de début d'un premier signal sonore reçu par le premier microphone est antérieur à un moment de début d'un deuxième signal sonore reçu par le deuxième microphone, et si l'intensité sonore du premier signal sonore est supérieure à l'intensité sonore du deuxième signal sonore, déterminer que le type d'opération est une première opération ; ou
si un moment de début d'un deuxième signal sonore reçu par le deuxième microphone est antérieur à un moment de début d'un premier signal sonore reçu par le premier microphone, et si l'intensité sonore du deuxième signal sonore est supérieure à l'intensité sonore du premier signal sonore, déterminer que le type d'opération est une deuxième opération.

8. Terminal mobile selon la revendication 6 ou 7, dans lequel si le premier microphone est un microphone disposé en haut du terminal mobile et le deuxième microphone est un microphone disposé en bas du terminal mobile, la première opération comprend :
un mouvement du contenu affiché du terminal mobile de haut en bas, et la deuxième opération comprend : un mouvement du contenu affiché du terminal mobile de bas en haut ; ou
si le premier microphone est un microphone disposé à gauche du terminal mobile et le deuxième microphone est un microphone disposé à droite du terminal mobile, la première opération comprend : un mouvement du contenu affiché du terminal mobile de gauche à droite, et la deuxième opération comprend : un mouvement du contenu affiché du terminal mobile de droite à gauche.

9. Terminal mobile selon la revendication 8, dans lequel si le premier microphone est un microphone disposé en haut du terminal mobile et le deuxième microphone est un microphone disposé en bas du terminal mobile, une distance d'opération qui correspond à la première opération est une distance par laquelle le contenu affiché du terminal mobile se déplace de haut en bas, et une distance d'opération qui correspond à la deuxième opération est une distance par laquelle le contenu affiché du terminal mobile se déplace de bas en haut ; ou
si le premier microphone est un microphone disposé à gauche du terminal mobile et le deuxième microphone est un microphone disposé à droite du terminal mobile, une distance d'opération qui correspond à la première opération est une distance par laquelle le contenu affiché du terminal mobile se déplace de gauche à droite, et une distance d'opération qui correspond à la deuxième opération est une distance par laquelle le contenu affiché du terminal mobile se déplace de droite à gauche.
